# EUROPEAN PATENT APPLICATION

(11) **EP 0 582 482 A1**
(43) Date of publication of application: **09.02.1994**
(21) Application number: 93306214.3
(22) Date of filing: 05.08.1993
(51) Int. Cl.: B60R 25/00

(54) **A security means**

(30) Priority: 05.08.1992 GB 9216614
(71) Applicant: INCHCAPE PLC, London, SW1Y 6QY (GB)
(72) Inventor: Sin, Chi-Leung, Quarry Bay (HK); Lee, Tak-Wah, Quarry Bay (HK)
(74) Representative: Powell, Timothy John

(57) **Abstract**

The security means is suitable for a motor vehicle wherein vehicle operating subsystems are controlled by respective electronic control means (10), such as fuel supply control means (10a) and/or ignition control means (10b). The security means includes disabling means (1) connectable to the control means (10). The disabling means (1) is also connected with a sensor (2). When the sensor detects tampering with vehicle mobilization means such as a steering lock (3), the disabling means (1) is actuated to disable one or more of the control means (10). Corresponding vehicle operating subsystems may also be switched off. Replacing the disabled control means (10) without correcting the tampering with the steering lock (3), and/or tampering with the connections between any of the integers, will actuate the disabling means to disable the replacement control means (10).

## Description

This invention relates to the provision of anti-theft systems for vehicles. The invention has particular but not exclusive relevance to the provision of anti-theft systems for motor cars.

To date, there have been a number of problems associated with motor car anti-theft systems. Most of these problems stem from the predictable manner in which the systems work. As a result, a car thief can usually tell from brands, model numbers, the positioning of security equipment, and the like, what needs to be done in order to overcome the impediments to theft a particular system may offer.

For instance, some security systems rely on sound to act as a deterrent to the thief. In some cases, such systems will, upon sensing that the car has been broken into, set off the car's horn or a separately provided siren, klaxon or the like. Typically, all the thief needs to do to overcome systems of this type is to locate the source of the sound and disconnect it from its power source. Typically, this is relatively easily done and, once the alarm sound has been turned off, the vehicle can be driven away.

In order to overcome the above problems, some security systems have been provided which immobilize the car. For example, some systems include a switching mechanism which is connected to one of the vehicle operating subsystems, such as the ignition or fuel system, so that when the security device is triggered, that vehicle operating subsystem is switched off and the car immobilized. Again, it has been found that thieves know by reference to the particular brand of anti-theft device source, serial numbers, letters and the like, which component or subsystem has been switched off and where the switching device is located. Thus, it is typically relatively easy for the thief to bring the vehicle out of its temporary immobilization.
In order to overcome problems associated with the thief merely switching back on a component switched off by a vehicle's security system, some systems when triggered actually destroy the component or operating subsystem, or substantially permanently disable it, so that the component or subsystem must be replaced. Again, it has been found that thieves can tell merely by reference to brands, numbers and letters, and system control box types and the like which component needs replacing. Thus, the thieves need merely replace the component, and perhaps disconnect the anti-theft system controller, in order to mobilize the vehicle.

That the protection from theft offerred by the abovementioned security systems is relatively short lived is also regarded as a disadvantage.

According to one aspect of this invention there is provided a security means mountable on a vehicle, operation of said vehicle being assisted by a plurality of vehicle operating subsystems the operation of which is controlled by respective electronic control means, said security means including disabling means connectable with at least one of said control means and sensor means connectable with said disabling means, said sensor means also being connectable, so as to detect tampering, with vehicle mobilization means, the arrangement being such that when said security means is in use, said sensor means will detect tampering with said mobilization means and actuate said disabling means to disable said control means.

Further aspects of this invention will become apparent from the following description of a preferred and exemplary embodiment of the invention made with reference to the drawings in which:
Figure 1 shows a working principle block diagram setting out the manner in which the system operates;
Figure 2 shows a circuit diagram for a disabling means in a preferred embodiment;
Figure 3 shows a schematic and cut away side view of a sensor according to the preferred and exemplary embodiment of the invention; and,
Figure 4 shows a cut away and schematic perspective view of a steering locking mechanism for use with the preferred embodiment of this invention.

The drawings and the following description are given by way of example only.

The exemplary embodiment of the invention is provided for use in motor cars whose operation is to a large extent electronically controlled. In such motor cars, vehicle operating subsystems such as the ignition system, the fuel supply system, the starting system, the transmission system and the like are typically controlled and monitored by relatively sophisticated electronic circuitry and componentry.

By this invention, a security means is provided which will, when it detects tampering with the vehicle such as the breaking open of the ignition and/or steering lock, disable the electronics controlling one or more of the operating subsystems so as to immobilize the vehicle. In the preferred embodiment, the security device may be connected with so as to disable any one of the range of control means for controlling subsystems which are essential to mobilization of the car. However, it is a feature of this invention that the device is not connected with any one control means in particular. This makes prediction of the manner in which the security device is to be overcome in order to mobilize the car relatively unpredictable.

Further, in the preferred embodiment, the security device is linked with more than one of the electronic control means and arranged so that if the device detects tampering or a connection between the sensor and the device or the device and a first control means is broken, the device will disable a second control means. And if, in the preferred embodiment, when a disabled control means is replaced, tampering or a broken connection still exists, the replacement control means will be disabled. In this respect, the invention provides not only the advantage of relative unpredictability, as the choice of connection of the device with any one or more control means is substantially at random (as described above), but also the advantage of protection for a relatively long time.

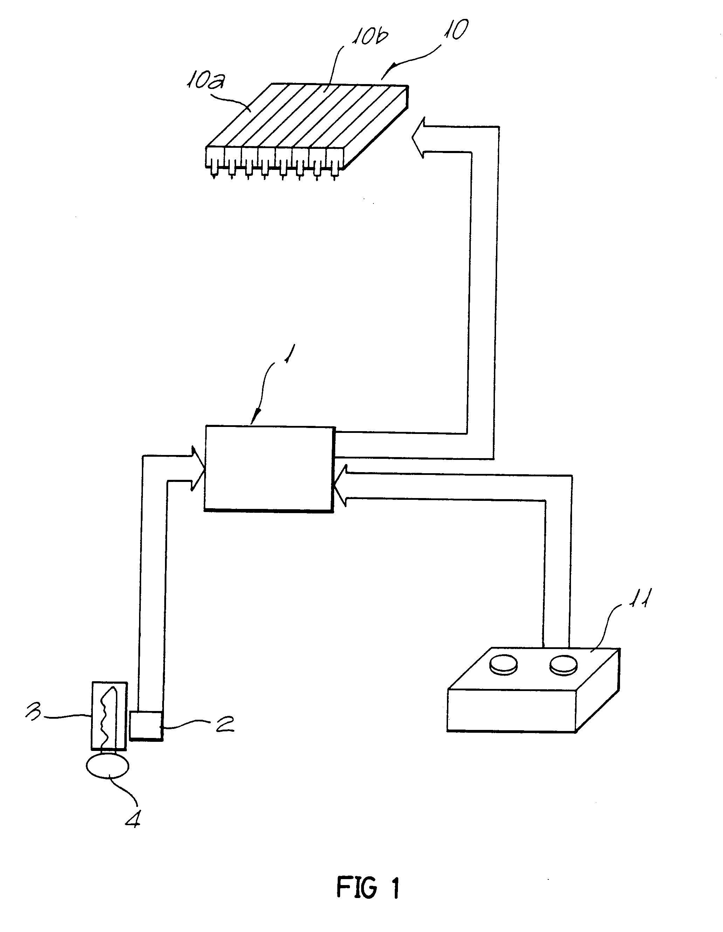

Turning to consider the preferred and exemplary embodiment in more detail, reference is made to Figure 1 in which the working principle of the preferred and exemplary embodiment is set out in block form. The exemplary security means is represented as if it was in use, mounted in a motor car.

A disabling means, unit 1, and sensor means, sensor 2, are shown. The sensor 2 and unit 1 are interconnected, in this case by a hard wire connection.

Sensor 2 is also connected with vehicle mobilization means, in this instance lock barrel 3 which is operable by use of a key 4 to actuate the car's ignition switch (not shown). Sensor 2 in this example is an induction-type proximity sensor. The sensor 2 is "connected" with barrel 3 in so far as it is positioned very closely adjacent the barrel so as to detect movement of the sensor and barrel away from one another.

In this example, sensor 2 has a rated sensing distance of 0.8mm (plus or minus 15%) with an optimum sensing distance of 0 to 0.6mm. The sensor hysteresis is less than 15% of the sensing distance.

It should be well appreciated that the vehicle mobilization means according to this invention need not be limited to ignition locking barrels and the like. In other examples of the invention, the sensing means is connectable with door locks and the like.

Further, it should be appreciated that in other embodiments of the invention sensors other than proximity sensors may be used. For example, a micro-switch or the like may be used.

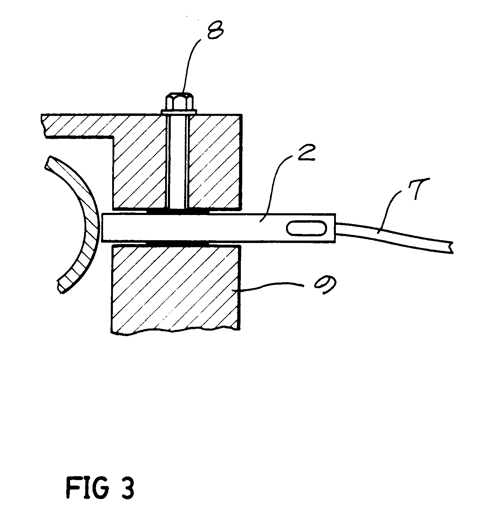

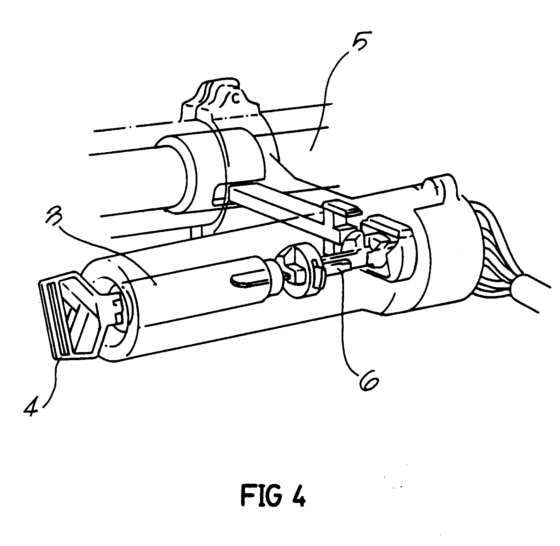

Turning now to the preferred and exemplary sensor, the positioning of the sensor 2 in relation to barrel 3 can more particularly be seen with reference to Figures 3 and 4.

Figure 4 shows a typical ignition switch and steering locking mechanism for a motor car. A key 4 can be seen as can barrel 3. Also shown is steering shaft 5 and ignition and steering locking switch 6. As will be appreciated, by turning key 4 in barrel 3 so ignition switch 6 may also be turned to free steering shaft 5 for use and start the vehicle. In order to mobilize the car, amongst other things, ignition switch 6 needs to be operated to unlock steering column 5 and actuate the starter. Typically, a vehicle thief will achieve this by removing the barrel 3 and operating ignition switch 6 using a screwdriver or the like.

Therefore, in this example, the proximity sensor 2 is positioned closely adjacent the barrel 3 to detect movement of the barrel as a result of tampering by a thief or the like.

Details of the positioning of the sensor 3 of this example of the invention can be seen with reference to Figure 3. As seen in Figure 3, sensor 2 positions adjacent lock barrel 3 and is connected by hard wire 7 with unit 1. The sensor is held in position on the steering/ignition unit 9 by means of locking bolt 8.

The sensor 2 is suitably positioned relative to lock barrel 3 and is suitably rated so that a suitable tolerance is allowed for normal use of the motor vehicle. Under normal conditions, a very minor DC signal is generated in the sensor 2 and transmitted to the unit 1 to suppress disablement by the unit 1. However, in response to movement between the sensor and the locking bolt such as that created by a thief tampering with or removing the barrel, the DC signal generated in the sensor 2 and transmitted to the unit 1 will be interrupted. The disablement suppression current will also be interrupted if the sensor 2 and the unit 1 are disconnected from other another, in this example of the invention.

The unit 1 is connected with at least one of the control means 10 which control vehicle operating subsystems essential to operation of the car. Two of the control means, fuel supply control means 10a and ignition control means 10b, are shown. The unit 1 is also connected with battery 11 of the car and is receiving power from it.

As shown and described, the exemplary security means is in use. That is to say, the unit 1 is connected with at least one of the control means 10 and is receiving power from the battery 11. The unit 1 is also connected with the sensor 2 which in turn is connected with the barrel 3 in order to sense tampering.

When the current in sensor 2 ceases to be transmitted to unit 1 as a result of a movement of the barrel 3 and the sensor 2 away from one another or a cutting of the connection between the sensor 2 and the unit 1, the unit 1 is actuated to disable one of the control means 10. In this example, the control means are disabled by a heavy current sent from unit 1.

And, in this example, the heavy current transmitted by the unit 1 to the control means acts to substantially permanently disable the control means. That is, the electronic componentry of the control means is so damaged by the overloading that the control means should be replaced before the particular operating system is restored to use and the vehicle remobilized.

Further, in this example, merely replacing the disabled control means (without reinstating the connection between the barrel 3 and sensor 2 and/or sensor 2 and unit 1 and the disablement suppression current) will cause the disabling means to disable the replacement control means.

In this embodiment of the invention, the control means with which unit 1 is connected is selected for connection with unit 1 "substantially at random". That is to say, the connection of the unit 1 may be with any one or more of the range of suitable control means but not with one control means in particular.

Further, in mounting the unit 1 on the car, the selection of a position to mount the unit is also made substantially at random. That is to say, though the unit 1 may be mounted in one of a number of preferred positions, it will not be mounted at any one position in particular.

Of course, in order for the security means of this invention to be effective, the range of control means with which the unit 1 is to be connected should include only those control means for vehicle operating subsystems which are more or less essential for mobilizing the car. Such operating subsystems were identified above, namely ignition system, fuel supply, starter and transmission systems and the like. The unit 1 should not be connected for the purposes of this invention to an air conditioning system or the like.

Returning to this example of the invention, the unit 1 is connected with ignition control means 10b and fuel supply control means 10a. The connection between the sensor 1 and the unit 1 and the unit 1 and the control means 10a and 10b is by way of hard wire connection. In this example, it is preferred that the unit 1 will be mounted so that the hard wire connection which extends from it to the control means will be relatively disguised within a number of the other hard wires which form part of the car's electrical system.

Any interruption of the supply of disablement suppression current from the sensor 2 to the unit 1 actuates the unit 1 to disable control means 10a when the security means of this example of the invention is in use. Thus, it will be appreciated that though the connection between the sensor 2 and the unit 1 may be readily apparent to a thief, particularly towards the sensor 2 end of the connection, disconnection of the sensor from the unit 1 or the barrel 3 will cause the control means 10a to be disabled and the car to be immobilized.

And, if the control means 10a is merely replaced (replaced without reinstating the connection between the sensor 2 and the barrel 3 and/or sensor 2 and unit 1 and the disablement suppression current), unit 1 will be actuated to disable the replacement control means. In an alternative embodiment, mere replacement of the control means 10a will, if the connections between the sensor 2 and the barrel 3 and/or the sensor 2 and the unit 1 are not reinstated, cause the unit 1 to disable the control means 10b.

Further, disconnection of the unit 1 and the control means 10a from one another will actuate the unit 1 to disable the control means 10b when the system is in use. Thus, even if a thief manages to locate one of the hard wire connections between the unit 1 and the control means, that will not be enough to enable the thief to overcome the security system; merely cutting the first wire found will actuate the security means to disable the second control means.

Again, mere replacement of the second control means will, if the connection between the first control means 10a and the unit 1 is not first reinstated, result in the unit 1 disabling the replacement control means.

Further, if the control means 10a is disconnected from its respective vehicle operating subsystem, unit 1 will be actuated to disable the control means 10b. And, mere replacement of the control means 10b will, unless connection between unit 1 and the control 10a has been reinstated, result in the unit 1 disabling the replacement control means.

It is further feature of this embodiment that when the unit 1 receives power from the battery 11 and so become armed, the unit 1 checks the electrical system of the security means, including connections between the sensor 2 and the unit 1 and the battery 11 and the unit 1 and the control means 10, for any signs of disconnection. If any disconnection is found, the unit 1 is actuated to disable the control means.

Thus, if a thief disconnects the battery 11 and then disconnects sensor 2 from the unit 1, on reconnection of the battery the unit 1 will be actuated to disable the control means 10a. Similarly, if on reconnection of the battery with the unit 1 the connection between the control means 10a and the unit 1 has been severed, so the unit 1 will be actuated to disable the unit 10b.

Further, even if a thief takes the time to disconnect the battery 11 and find and sever the connections between the unit 1 and the control means 10a and 10b, the thief cannot be sure that a third, fourth or fifth control means is not connected with the unit 1.

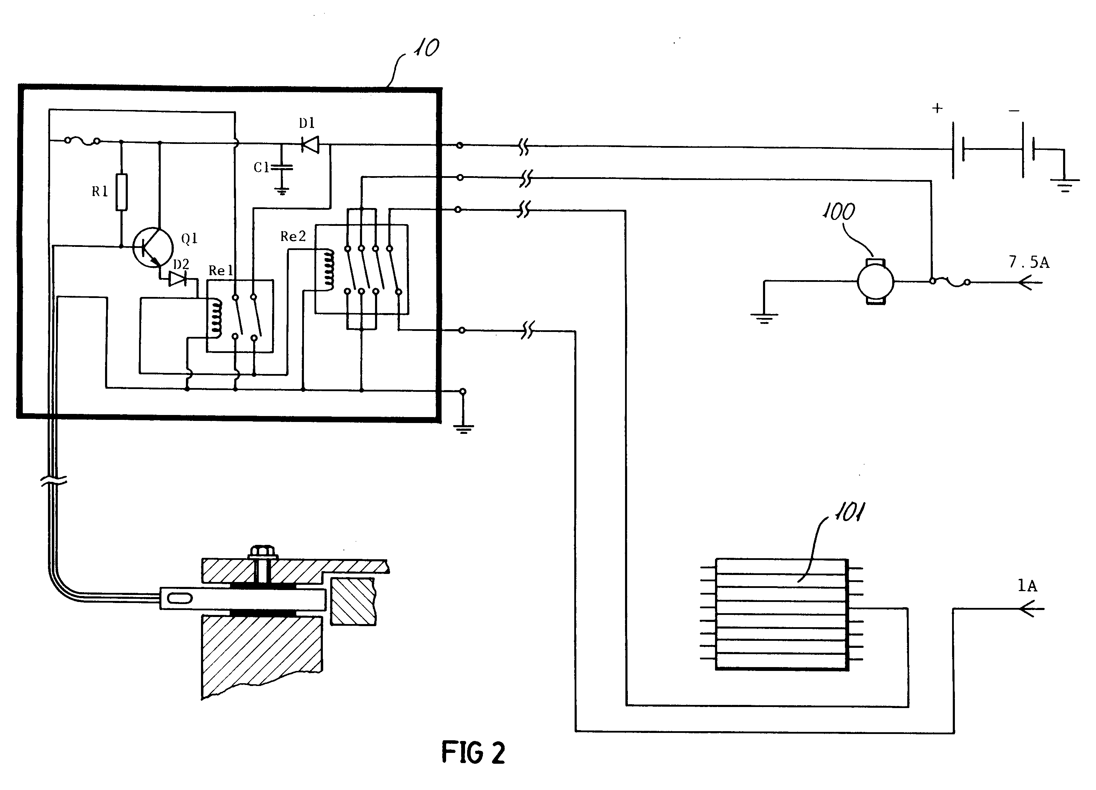

A circuit diagram setting out an arrangement of components for a further preferred security means is shown in Figure 2. This embodiment operates in much the same manner as the embodiments referred to above. However, the disabling means, control means and the vehicle operating subsystem corresponding to the control means are inter-linked so that when the disabling means is actuated it disables the control means and suspends operation of the corresponding subsystem by disconnecting it from the motor vehicle's electrical system. In this example, unit 10 will disconnect so as to suspend the operation of fuel pump motor 100 and disable the fuel pump motor control means 101.

As will be appreciated by those of ordinary skill in the field, alternative circuit layouts may be used.

Thus, it will be appreciated that by this invention there are provided improved security means for vehicles in which the operation of those vehicles is assisted by a plurality of vehicle operating subsystems the operation of which is in turn controlled by respective electronic control means.

Amongst the advantages that this invention provides, many of which will be appreciated by reference to the above description, is the advantage of delaying a thief from mobilising a vehicle for a relatively long time. Because a thief is unable to predict with any certainty which and how many of the control systems might be disable, the thief is likely to be faced with relatively more time in remobilizing the car than the thief will be faced with in the case of other systems.

And, if the control means which are connected with the disabling means are of a type which takes a relatively long time to repair and/or replace after disablement by the security means, so a thief will be faced a relatively long time in which to remobilize a vehicle disabled by the security means according to this invention.

One or both of the above factors will act as a deterrent to theft, either by immobilizing the vehicle or, in a case where the thief recognises the system, by making the thief aware of the impediments to theft that the system may offer.

Though this invention has been described in relation to a preferred and exemplary embodiment and a number of alternatives, further alternatives and modifications and improvements are envisaged and are intended to be incorporated into the invention without departing from the scope thereof.

## Claims

1. A security means mountable on a vehicle, operation of said vehicle being assisted by a plurality of vehicle operating subsystems the operation of which is controlled by respective electronic control means, the security means including disabling means connectable with at least one of the control means and sensor means connectable with the disabling means, the sensor means also being connectable, so as to detect tampering, with vehicle mobilization means, the arrangement being such that when the security means is in use, the sensor means will detect tampering with the mobilization means and actuate the disabling means to disable the control means.

2. Apparatus as claimed in claim 1 wherein replacing the disabled control means will actuate the disabling means to disable a replacement control means if, upon connection of the replacement control means with the security means, the sensor detects tampering.

3. Apparatus as claimed in claim 1 wherein the disabling means is connected with at least two control means, the arrangement being such that when the security means is in use, the sensor will detect tampering with the mobilization means and actuate the disabling means to disable at least a first of the control means.

4. Apparatus as claimed in claim 3 wherein replacing the disabled control means will actuate the disabling means to disable the replacement control means if, upon connection of the replacement control means with the security means, the sensor detects tampering.

5. Apparatus as claimed in claim 3 wherein replacing the disabled control means will actuate the disabling means to disable at least one of the control means previously not disabled, if upon connection of the replacement control means with the security means, the sensor detects tampering.

6. Apparatus as claimed in claim 1 wherein a disconnection of the sensor and the disabling means from one and other will actuate the disabling means to disable the control means.

7. Apparatus as claimed in claim 6 wherein replacing the control means will actuate the disabling means to disable the replacement control means if upon connection of the replacement control means the sensor and disabling means are disconnected.

8. Apparatus as claimed in claim 1 wherein the disabling means is connected with at least two control means and a disconnection of the sensor and the disabling means from one another will actuate the disabling means to disable at least a first of the control means.

9. Apparatus as claimed in claim 8 wherein a disconnection of the disabling means and a first of the control means from each other will actuate the disabling means to disable at least a second of the control means.

10. Apparatus as claimed in claim 8 wherein a disconnection of a first of the control means from a respective vehicle operating subsystem will actuate the disabling means to disable at least a second of the control means.

11. Apparatus as claimed in any one of the claims 8, 9 and 10 wherein replacing the disabled control means will actuate the disabling means to disable at least the replacement control means if, upon connection of the replacement control means with the security means, the disconnection which caused the previous disablement remains.

12. Apparatus as claimed in any one of the preceding claims 1 to 10 wherein a movement to remove the disabling means from a mounted condition will actuate the disabling means to disable the control means.

13. Apparatus as claimed in any one of the preceding claims 1 to 10 wherein the security means is electronic and the disabling means sends a heavy current to disable the control means.

14. Apparatus as claimed in any one of the preceding claims 1 to 10 wherein the control means are substantially permanently disabled by the disabling means.

15. Apparatus as claimed in any one of the preceding claims 1 to 10 wherein the disabling means is actuated to disable said control means and to disconnect a subsystem corresponding to said control means from an electrical system of said vehicle.
